Europäisches Patentamt

European Patent Office

Office européen des brevets

(19)

(11) Publication number: **0 092 370**
**A1**

# EUROPEAN PATENT APPLICATION

(21) Application number: **83302081.1**

(22) Date of filing: **13.04.83**

(51) Int. Cl.³: **H 02 P 7/62**

(30) Priority: **16.04.82 NZ 200327**

(43) Date of publication of application: **26.10.83**
**Bulletin 83/43**

(84) Designated Contracting States: **AT BE CH DE FR IT LI LU NL SE**

(71) Applicant: **Conder International PLC, Kingsworthy Court Kingsworthy, Winchester Hampshire (GB)**

(72) Inventor: **Empson, Thomas Mark, 53, Mackenzie Avenue, Christchurch (NZ)**
Inventor: **Rutherford, John Gordon, 299, Durham Street, Christchurch (NZ)**

(74) Representative: **Sturt, Clifford Mark et al, MARKS & CLERK 57-60 Lincoln's Inn Fields, London WC2A 3LS (GB)**

(54) **A.C. motor controller.**

(57) An energy conserving motor controller for starting and operating A.C. induction motors at high efficiency.

This invention provides a power controller for an A.C. induction motor (4) comprising switching means (1, 2, 3) which control the alternating currents supplied to the motor (4), and control means (5) which control the non-conduction angle of the motor (4) according to control voltages from either the efficiency monitors (6) or soft start control (7).

The efficiency monitor (6) monitors the voltage generated by the motor (4) during the non-conduction of the switching means (1, 2, 3). If that voltage is less than a reference, the non-conduction angle is reduced whereas if the voltage is greater than the reference, the non-conduction angle is increased.

For motors operating at less than full load efficiency, the voltage and consequently the iron losses are reduced.

The soft start control (7) causes the initial non-conduction angle to equal a present angle, and decrease slowly to zero thereby reducing the start voltage and hence start current and torque supplied to the motor (4).

0092370

A.C. MOTOR CONTROLLER

The present invention relates to the reduction of Iron losses and magnetising current of A.C. Induction motors operating with reduced load and efficiency.

Previous systems for improving A.C. Induction motor efficiency have been dependent on the stator impedance and/or power factor. Such systems have required accuracy in setting up for each motor and have also suffered from slow response times. Systems responsive only to stator power factor, if presented with a sudden increase in motor load, may be forced into a stall condition due to the dual polarity of the slope of the curve of power factor against rotor speed.

According to the present invention there is provided a power controller for an A.C. induction motor, comprising: switching means which control alternating current supplied to the motor; control means which control the non-conduction angle of the switching means; monitor means which monitor the voltage generated by the motor during the non-conduction of the switching means; comparator means which compare the generated voltage with a reference; voltage control means which change the non-conduction angle of the switching means according to the output of the comparator means in a manner to maintain the generated voltage substantially equal to the reference; and power factor monitoring and comparator means which act to override the voltage control means in a manner to reduce the non-conduction angle when the monitored power factor exceeds the reference.

This invention provides electronic apparatus for controlling the voltage applied to A.C. induction motors in a manner to reduce energy wastage by lightly loaded induction motors.

Preferably, the switching means is in the form of a plurality of triacs, polarity opposed parallel connected silicon controlled rectifiers or other solid state switches, connected in series with the applied line voltage or in series with the motor stator windings. The switches are controlled in a manner which both minimises the effect on output voltage by variations in load power factor and minimises the voltage generated by the motors during the switch non-conduction state. The minimum generated voltage during switch non-conduction equals zero or a preset reference voltage.

A major advantage of the present invention is that the parameter monitored and used to determine motor loading is essentially independent of individual motor characteristics removing the necessity to tune the controller to the motor, or add mechanical sensing means to the motor.

Particular embodiments of the invention are suitable for use in Variable Voltage Variable Frequency applications either as a controller between the variable voltage frequency source or by incorporating the algorithm here described in the voltage control stage variable voltage variable frequency source.

A preferred embodiment of the invention monitors the voltage generated across the stator windings during the non-conduction of the A.C. switching means and compares this voltage with a constant reference, such reference being the neutral or star point voltage in the case of a three phase motor, such embodiment including a power factor derived override circuit to ensure full voltage at full load.

Embodiments of the present invention will now be described by way of example only and with reference to the accompanying drawings, in which:

Figure 1 is a block diagram of part of a controller for a three phase motor;

Figure 2 is a block diagram of the voltage monitor and compare means as applied to one phase;

Figure 3 illustrates the circuitry which controls the non-conduction angle of the A.C. switches as applied to one phase incorporating the power factor overrider for full voltage control;

Figure 4 illustrates the power factor detector circuit as used in each phase; and

Figure 5 illustrates the soft start/soft stop circuitry.

A first embodiment of the invention comprises a switching means in each phase or in sufficient phases to provide complete control of the alternating current supplied to the load. Each switching means is controlled by trigger signals such that current conduction ceases at cessation of load current flow. Monitor means are provided whereby the magnitude of the voltage generated across the stator terminals is monitored and comparison means are provided for comparison of the voltage magnitude with a reference, such reference being equal to neutral for three phase systems. Further monitor means are provided whereby the polarities of the applied phase voltages and phase currents are monitored and power factor dependent pulses derived.

The controller includes means for generating a time reference signal, representative of the time elapsed from the last voltage zero crossing, there being one such reference per controlled phase. The embodiment has control means for generating the trigger signals for the A.C. switching means, such control means being responsive to the comparison between a control voltage
and the time reference signals.

The control reference voltage directly controls the
non-conduction angle of each A.C. switching means, such
non-conduction angle being independent of load power
factor.  These trigger signals are applied to the A.C.
switching means at a delay angle from the current cessation for that switching means and the delay angle is
proportional to the control reference voltage.

The control voltage is common to all controlled phases,
resulting in equal control on all phases maintaining
applied voltage and load current balance.

The control voltage is derived from the output of
circuitry which monitors the generated voltage from the
stator terminal and compares this voltage with a
reference voltage, increasing or decreasing the control
voltage in a manner to keep the minimum voltage equal to
the reference voltage.

The control voltage is overridden by a power factor
compare circuit for monitored power factor better than a
reference power factor.

The embodiment can provide reduced voltage starting to
reduce starting current and torque.

6 0092370

The following description explains one application of
the invention wherein the voltage controller controls
the voltage from a three phase constant voltage constant
frequency supply, such controlled voltage being applied
to a three phase three wire alternating current induction motor with the non-conduction angle being controlled in a manner to reduce the inefficiency of the motor.

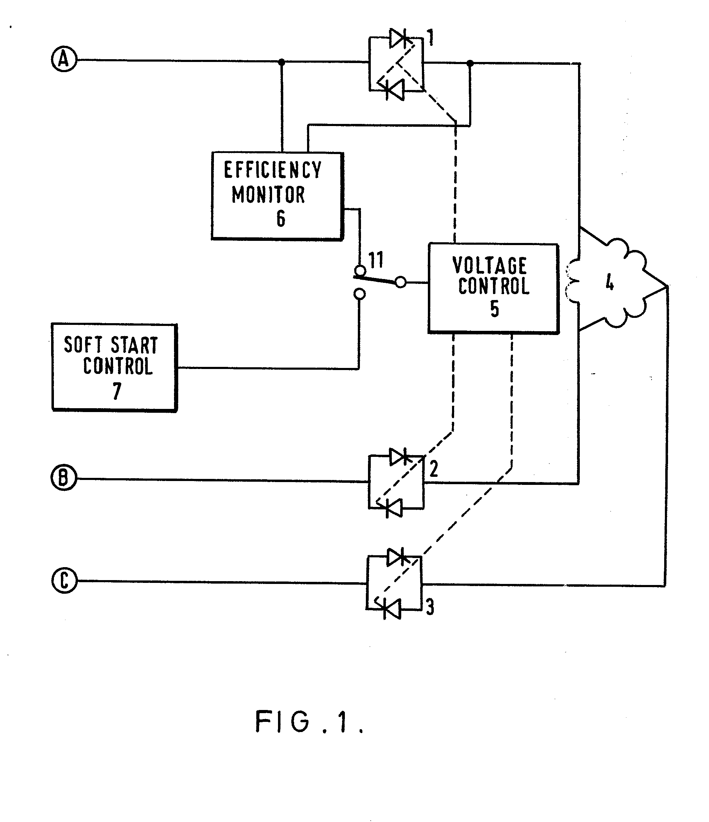

As depicted in Figure 1, three semiconductor A.C.
switches comprising reverse parallel connected silicon
controlled rectifiers 1, 2 and 3 are used to control the
current in each phase of a three phase delta configured
motor 4. The voltage control section 5 controls the
non-conduction angle of the A.C. switches 1, 2 and 3 and
thus controls the voltage applied to the motor. The
voltage control section 5 is controlled by the soft
start section 7 during starting causing the average
voltage applied to the motor 4 by the A.C. switches 1, 2
and 3 to increase from a low value to full line voltage.

Under dynamic operating conditions, the voltage control
section 5 is controlled by the efficiency monitor section 6, which monitors the motor efficiency and signals
the voltage controller 5 in a manner that causes the
motor to operate at improved efficiency under reduced
load conditions.

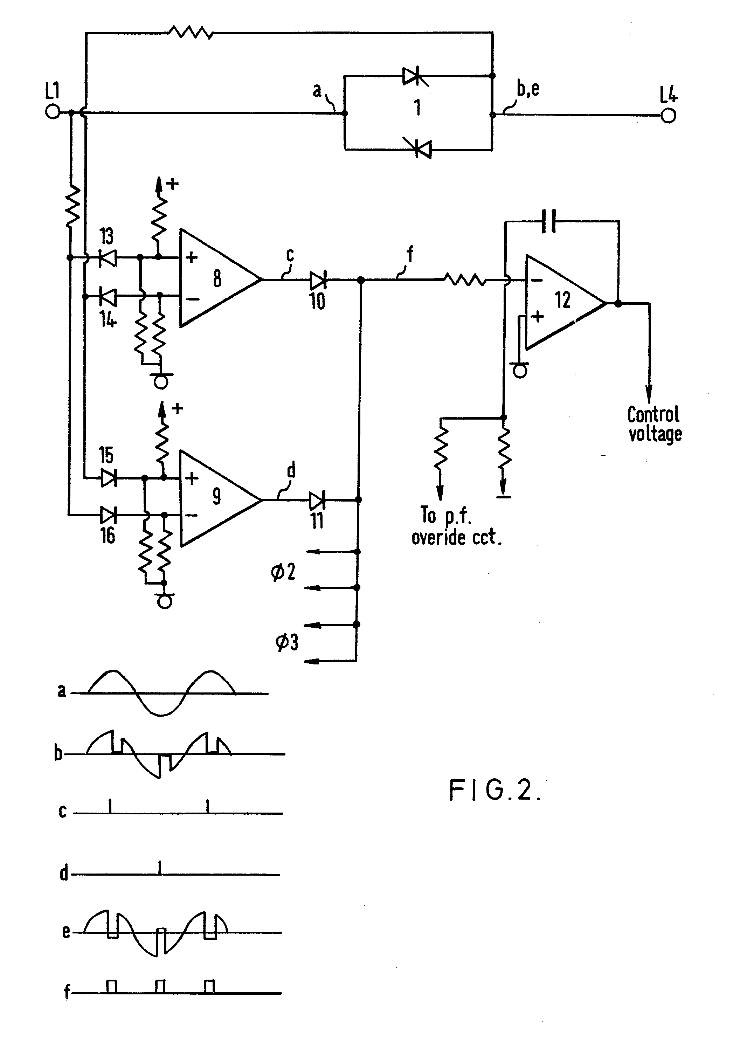

As depicted in Figure 2 the op-amps 8 and 9 monitor the input and output voltage waveforms wherein op-amp 8
outputs a high voltage when the positive generated voltage crosses neutral potential and op-amp 9 outputs a
high voltage when the negative generated voltage crosses
neutral potential.  The high outputs from op-amps 8 and
9 are coupled to the control voltage integrator op-amp
12 via the diodes 10 and 11.

The output voltage from the control integrator ramps
slowly upwards increasing the non-conduction angle until
outputs appear via 10 and 11, or a power factor override
signal is received.  Waveform 'a' shows the input phase
voltage and a typical controlled output voltage is
illustrated as waveform 'b'.  Waveforms 'c' and 'd'
illustrate the output signals from the op-amps 8 and 9.

Conditions of excessive non-conduction angle lead to a
controlled voltage waveform as depicted in waveform 'e'
with a combined waveform 'f' applied to the integrator
resulting in a reduction in controlled voltage and
consequential reduction in non-conduction angle.

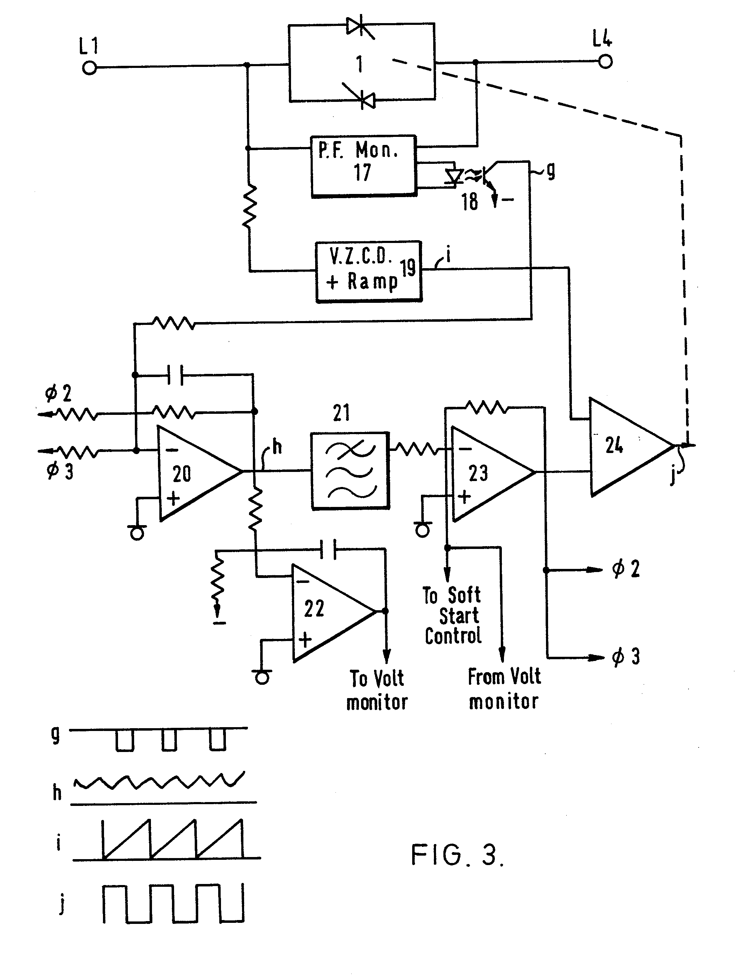

As depicted in Figure 3, the power factor monitor 17
monitors the angle between current and voltgae zero
crossings and outputs a pulse stream 'g' with mark/space
ratio dependent on the monitored angle.  The pulse
stream is coupled to op-amp 20 via an opto coupler 18,
there being one such power factor monitor per controlled phase. Op-amp 20 functions to sum the power factor waveforms from all monitored phases and provide limited filtering, to output a partially filtered D.C. voltage 'h'. This voltage is further filtered by a low-pass filter 21 and added to the output of the voltage monitor and soft start control by the buffer 23.

A voltage zero crossing detector and ramp generator 19 monitors the applied phase voltage generating a ramp voltage waveform 'i' synchronised in phase to the zero crossings and operating at a frequency double that of the applied frequency.

The ramp voltage is applied to the comparator 24 where it is compared in magnitude to the control voltage to generate a firing control signal 'j'.

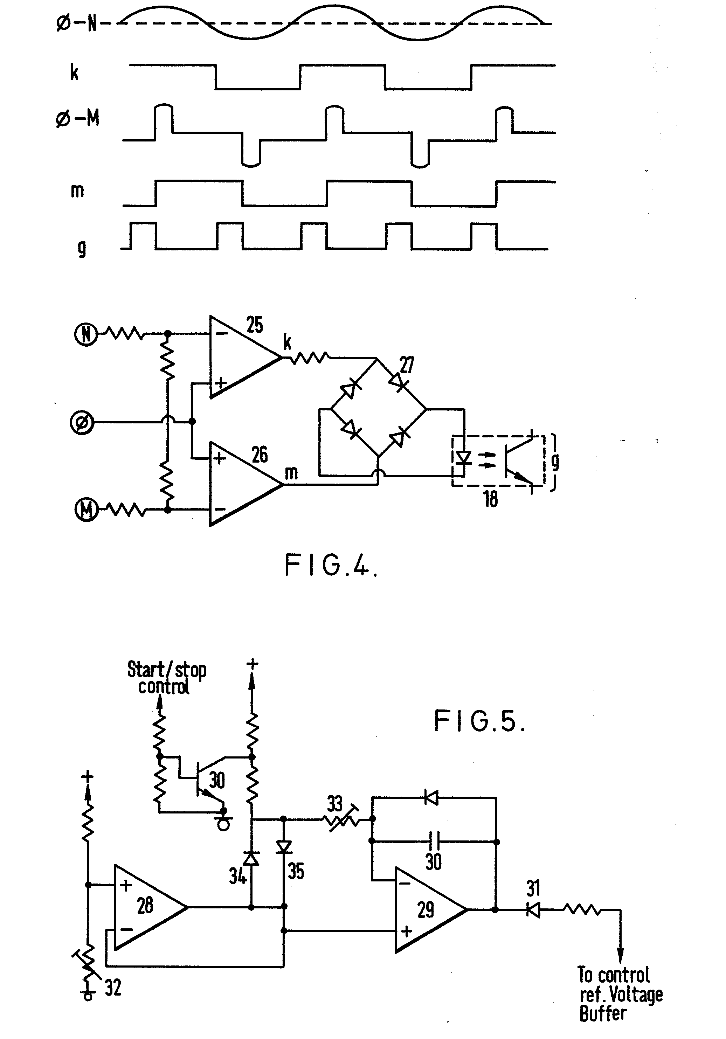

As depicted in Figure 4, the power factor monitor comprises two operational amplifiers 25 and 26, and a diode full wave bridge 27. Operational amplifier 25 monitors the applied phase voltage and outputs a square-wave 'k' with polarity equal to the applied phase. The voltage across the solid state soft switches is monitored by comparator 26 outputting a square wave 'm' in phase with the current flow. The two waveforms 'k' and 'm' are Exclusive OR'd by the circuit using full wave bridge 27 and optical isolator 24. The output waveform from the optical isolator is shown as 'g'.

As depicted in Figure 5, the soft start circuit comprises a variable reference voltage source and an integrator 29. The voltage is adjusted by means of potentiometer 32 and buffered by operational amplifier 28. The diodes 34 and 35 provide a constant voltage above or below the reference with transistor 30 controlling the polarity of the offset voltage. The offset voltage is converted to a constant current by the potentiometer 33 and the magnitude of this current is controlled by the valve set by potentiometer 33. The magnitude and polarity of the current applied to the integrator 29 charges or discharges the capacitor 30 to provide the soft start or soft stop option.

The soft start voltage is applied via a diode 31 to ensure that the effective offset to the control voltage is only applied during starting or stopping.

The principles herein described are applicable to both single phase and multiphase control systems and may be applied to multiphase systems with or without the neutral connection.

The principles herein described are applicable to variable voltage frequency invertors or alternators to control the voltage applied to the motors with varying frequency for the purpose of variable speed control.

Claims:

1. A power controller for an A.C. induction motor (4), comprising

switching means (1,2,3) which control alternating current supplied to the motor (4), characterised by

control means (5) which control the non-conduction angle of the switching means (1,2,3);

monitor means (6) which monitor the voltage generated by the motor (4) during the non-conduction of the switching means (1,2,3);

comparator means which compare the generated voltage with a reference;

voltage control means which change the non-conduction angle of the switching means (1,2,3) according to the output of the comparator means in a manner to maintain the generated voltage substantially equal to the reference; and

power factor monitoring and comparator means (17) which act to override the voltage control means in a manner to reduce the non-conduction angle when the monitored power factor exceeds the reference.

2. A power controller as claimed in claim 1, characterised in that the switching means (1,2,3) comprise a separate switch for each motor phase and the control means (5) includes a voltage zero crossing detector (19) for each switch, the detectors (19) each generating a signal at each zero crossing of the applied voltage of the respective phase.

3. A power controller as claimed in claim 2, characterised in that the control means (5) includes a ramp generator (19) generating a time reference ramp voltage in which the instantaneous voltage is representative of the angle or time elapsed from the applied voltage zero crossing and wherein the comparator means comprises a plurality of comparators (24) with respective comparators (24) comparing the ramp voltage with the reference.

4. A power controller as claimed in claim 3, characterised by a firing signal generator circuit, the output of each comparator (24) being used to control the firing signal generator circuit which triggers the respective switch (1,2,3) into conduction when the magnitude of the ramp voltage exceeds the magnitude of the reference.

5. A power controller as claimed in claim 1, characterised in that the monitor means (6) comprises one monitor means per A.C. switching means (1,2,3).

6. A power controller as claimed in claim 5, characterised by a bias circuit providing a bias current and an integrator which integrates the bias current and the output of each of a plurality of comparators which form the comparator means, in such a manner that the voltage output of the integrator increases until one or more comparators signal motor generated voltages less than the reference.

7. A power controller as claimed in claim 6, characterised in that the output of the integrator, integrating the sum of bias current and the output of each comparator, reduces in voltage for generated voltages less than the reference.

8. A power controller as claimed in claim 1, characterised by secondary monitor means for each controlled phase, which generate pulse signals of mark/space ratio representative of the angle between voltage and current zero crossings, and a summing and filtering buffer amplifier (20) which generates a D.C. voltage dependent on the combined average of the outputs from the said secondary monitor means.

9. A power controller as claimed in claim 8, characterised by second comparator means which compare the D.C. voltage representative of the angle between voltage and current zero crossings with the reference, the result of such comparison being used to reduce the control voltage for measured angles less than the reference.

10. A power controller as claimed in claim 1, characterised by means providing a control reference voltage, such control reference voltage being used to control the delay angle for the triggering of the switching means (1,2,3), the control reference voltage being the sum of the voltage representative of the measured angle between voltage and current zero crossings and the output of a control integrator.

11.   A power controller as claimed in claim 1, characterised in that the switching means (1,2,3) is in series with one or more stator windings.

12.   A power controller as claimed in claim 1 and for use with a polyphase motor (4), characterised in that the switching means comprises a number of switching units (1,2,3) each connected in a respective phase of the motor (4) and each being capable of conduction of the full current in that phase.

13.   A power controller as claimed in claim 1 and for use with a polyphase motor (4), characterised in that the switching means comprise a number of switching units (1,2,3) each connected in a respective controlled phase of the motor (4) and each being capable of conduction of the full current in that phase, there being sufficient phases controlled for system operation.

14.   A power controller as claimed in claim 1, charac-

0092370

terised by an integrator circuit (29) to provide soft start, the integrator circuit (29) having an adjustable start voltage and ramp rate.

15. A power controller as claimed in claim 14 characterised in that the integrator circuit can also be used to provide soft stop.

FIG.1.

0092370

2/4

FIG.2.

FIG. 3.

0092370

FIG.4.

FIG.5.

Start/stop control

To control ref. Voltage Buffer

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | EP-A-0 049 129 (NATIONAL RESEARCH DEVELOPMENT CORP.) * Page 11, line 7 - page 13, line 30; page 18, line 21 - page 19, line 11; page 21, line 5 and following * | 1-13 | H 02 P 7/62 |
| A | US-A-4 052 648 (F.J. NOLA) * Column 1, line 56 - column 2, line 39 * | | |
| A | DE-A-2 707 833 (LOHER) * Complete document * | | |
| A | POPULAR ELECTRONICS, October 1979 M.H. MARKS "NASA motor-control circuit cuts electric cost...", pages 39-43 * Complete document * | | TECHNICAL FIELDS SEARCHED (Int. Cl. ³) H 02 P 5/00 H 02 P 7/00 |

The present search report has been drawn up for all claims

| Place of search BERLIN | Date of completion of the search 05-07-1983 | Examiner GESSNER E A F |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82